# EUROPEAN PATENT SPECIFICATION

(11) **EP 3 866 321 B1**
(45) Date of publication and mention of the grant of the patent: **02.12.2026**
(21) Application number: 19871651.6
(22) Date of filing: 15.10.2019
(51) Int. Cl.: H02M 1/14, H02M 1/15, H02M 1/42, H02M 3/158, H02M 7/06, H02M 5/458, H02M 1/00

(54) **AC-DC CONVERTER AND AC-AC CONVERTER**
WECHSELSTROM-GLEICHSTROMWANDLER UND WECHSELSTROMWANDLER
CONVERTISSEUR CA-CC ET CONVERTISSEUR CA-CA

(30) Priority: 12.10.2018 JP 2018193799; 31.10.2018 JP 2018204658; 02.04.2019 JP 2019070746
(43) Date of publication of application: 18.08.2021
(73) Proprietor: Nabtesco Corporation, Tokyo 102-0093 (JP)
(72) Inventor: ONO, Yasuo, Tokyo 102-0093 (JP); HAIDER, Michael, 8092 Zurich (CH); BORTIS, Dominik, 8092 Zurich (CH); KOLAR, Johann Walter, 8092 Zurich (CH)
(74) Representative: Grünecker Patent- und Rechtsanwälte PartG mbB
(86) International application number: PCT/JP2019/040434
(87) International publication number: WO 2020/075867

(56) References cited:
- WO-A1-2010/010710
- JP-A- 2009 095 160
- JP-A- 2015 023 697
- US-A1- 2018 034 403
- VITORINO MONTIE ALVES ET AL: "Low-Frequency Power Decoupling in Single-Phase Applications: A Comprehensive Overview", IEEE TRANSACTIONS ON POWER ELECTRONICS, INSTITUTE OF ELECTRICAL AND ELECTRONICS ENGINEERS, USA, vol. 32, no. 4, April 2017 (2017-04-01), pages 2892 - 2912, XP011639818, ISSN: 0885-8993, [retrieved on 20170123], DOI: 10.1109/TPEL.2016.2579740
- HAN HUA ET AL: "Single-phase current source converter with power decoupling capability using a series-connected active buffer", IET POWER ELECTRONICS, IET, UK, vol. 8, no. 5, May 2015 (2015-05-01), pages 700 - 707, XP006052009, ISSN: 1755-4535, DOI: 10.1049/IET-PEL.2014.0068

## Description

### TECHNICAL FIELD

The present invention relates to an AC-DC converter, a DC-DC converter, and an AC-AC converter that convert electricity.

### BACKGROUND ART

As an AC-DC converter for converting electricity supplied from a single-phase AC power supply into DC electricity, an AC-DC converter provided with a rectifier circuit and a smoothing capacitor has been disclosed (see JP 2016-067199 A, for example).

Patent document US 2018/0034403 A1 discloses a motor driving device which includes: a rectifier rectifying alternating current (AC) power into direct current (DC) power to output an input voltage; a first buck-boost converter including a plurality of switches for converting the input voltage and having a buck mode of stepping down the input voltage and a boost mode of stepping up the input voltage; an inverter converting a DC-link voltage transformed from the first buck-boost converter into anAC voltage and transferring the AC voltage to a motor; and a controller receiving motor information related to driving of the motor, comparing magnitudes of a desired DC-link voltage depending on the received motor information and the input voltage with each other, and performing a control to switch only any one of the plurality of switches so that the first buck-boost converter is operated in the buck mode or the boost mode.

The article "Single-phase current source converter with power decoupling capability using a series connected active buffer" by H. Han. Y Liu, Y. Sun, M. Su, and W. Xiong (IET Pouwer Electron., Vol. 8, No. 5, pp. 700-707, 2015) discloses an AC/DC converter with a series-connected active buffer. This topology is also discussed in the review article "Low-Frequency Power Decoupling in Single-Phase Applications: A Comprehensive Overview" by M. A. Vitorino et al. (IEEE Transactions On Power Electronics, Vol. 32, No. 4, April 2017).

### SUMMARY OF INVENTION

### TECHNICAL PROBLEM

In household electric appliances and industrial equipment, electricity supplied from a single-phase AC power supply is generally converted into DC electricity by means of an AC-DC converter, and the DC electricity is then converted by an inverter into three-phase AC electricity to be used for motor control. Such an AC-DC converter is generally configured to include a rectifier circuit that converts electricity supplied from an AC power supply into DC electricity. However, such conversion from single-phase AC electricity to DC electricity naturally causes a difference between the input electricity and the output electricity, which then causes pulsation of electricity. To absorb and compensate for the pulsation, a buffer is necessary. Conventionally, such a buffer has been generally constituted by a high-capacity DC link capacitor. In this case, the capacitance required for the DC link capacitor is significantly large. For example, when the operating frequency is the order of kW and the power supply voltage is 100 V, the capacitance of the DC link capacitor will be of the order of mF. To achieve this, a high-capacity electrolytic capacitor needs to be used. However, because of its larger size and shorter life, an electrolytic capacitor has large disadvantages in size, cost, and life of equipment. Accordingly, there is a need for an AC-DC converter in which an electrolytic capacitor is not required for the DC link capacitor.

The present invention has been made in view of such an issue, and a purpose thereof is to achieve an electrolytic-capacitorless AC-DC converter.

This is achieved by the features of the independent claims. Preferred embodiments are the subject matter of the dependent claims.

### ADVANTAGEOUS EFFECTS OF INVENTION

The present invention achieves an electrolytic-capacitorless AC-DC converter with a low-capacity DC link capacitor.

### BRIEF DESCRIPTION OF DRAWINGS

Embodiments will now be described, by way of example only, with reference to the accompanying drawings which are meant to be exemplary, not limiting, and wherein like elements are numbered alike in several Figures, in which:
FIG. 1 is a functional block diagram that illustrates an AC-DC converter according to an embodiment;
FIG. 2 is a functional block diagram that illustrates an AC-DC converter according to a comparative example;
FIGS. 3 are diagrams that each show time variations of a voltage, a current, and electricity of the AC-DC converter illustrated in FIG. 2, in which FIG. 3A shows time variations of an input voltage, an input current, and input electricity, and FIG. 3B shows time variations of a DC link voltage, a DC link capacitor current, and DC link capacitor electricity;
FIG. 4 is a diagram that illustrates a step-up operation in the AC-DC converter illustrated in FIG. 2;
FIG. 5 is a diagram that shows time variations of the input voltage, a rectified voltage, the DC link voltage, the input current, an inductor current, an average step-down circuit switch current, an average step-up circuit switch current, a duty cycle, output electricity, and the DC link capacitor electricity during the step-up operation illustrated in FIG. 4;
FIG. 6 is a diagram that illustrates a step-down operation in the AC-DC converter illustrated in FIG. 2;
FIG. 7 is a diagram that shows time variations of the input voltage, rectified voltage, DC link voltage, input current, inductor current, average step-down circuit switch current, average step-up circuit switch current, duty cycle, output electricity, and DC link capacitor electricity during the step-down operation illustrated in FIG. 6;
FIGS. 8 are diagrams that each illustrate current control performed by a buffer circuit in the AC-DC converter illustrated in FIG. 1, in which FIG. 8A illustrates first current control, FIG. 8B illustrates second current control, FIG. 8C illustrates third current control, and FIG. 8D illustrates fourth current control;
FIG. 9 is a diagram that illustrates the step-up operation in the AC-DC converter illustrated in FIG. 1;
FIG. 10 is a diagram that shows time variations of the input voltage, rectified voltage, DC link voltage, input current, inductor current, average step-down circuit switch current, average step-up circuit switch current, and duty cycle during the step-up operation illustrated in FIG. 9;
FIG. 11 is a diagram that illustrates the step-down operation in the AC-DC converter illustrated in FIG. 1;
FIG. 12 is a diagram that shows time variations of the input voltage, rectified voltage, DC link voltage, input current, inductor current, average step-down circuit switch current, average step-up circuit switch current, and duty cycle during the step-down operation illustrated in FIG. 11;
FIG. 13 is a diagram that shows time variations of buffer capacitor electricity, the DC link capacitor electricity, a buffer capacitor voltage, an average buffer voltage, a buffer duty cycle, a first buffer duty cycle, and a second buffer duty cycle of the AC-DC converter illustrated in FIG. 1;
FIG. 14 is a functional block diagram that illustrates a control unit in the AC-DC converter illustrated in FIG. 1;
FIG. 15 is a schematic diagram that illustrates a buffer circuit in the AC-DC converter according to the embodiment;
FIG. 16 is a schematic diagram that illustrates another buffer circuit in the AC-DC converter according to the embodiment;
FIG. 17 is a schematic diagram that illustrates yet another buffer circuit in the AC-DC converter according to the embodiment;
FIG. 18 is a functional block diagram that illustrates a DC-DC converter according to an example; and
FIG. 19 is a functional block diagram that illustrates an AC-AC converter according to an embodiment.

### DESCRIPTION OF EMBODIMENTS

In the following embodiments, like reference characters denote like constituting elements, and repetitive description will be omitted. Also, for the sake of convenience, part of the constituting elements may be appropriately omitted in each drawing. Unless otherwise specified, for a numerical value A, <A> denotes an average value of A, and A* denotes a target value of A. In the present specification, along a flow of current or a signal from the power supply side toward the output side, the upstream side may be referred to using "preceding" or "input", and the downstream side may be referred to using "subsequent" or "output".

### First Embodiment

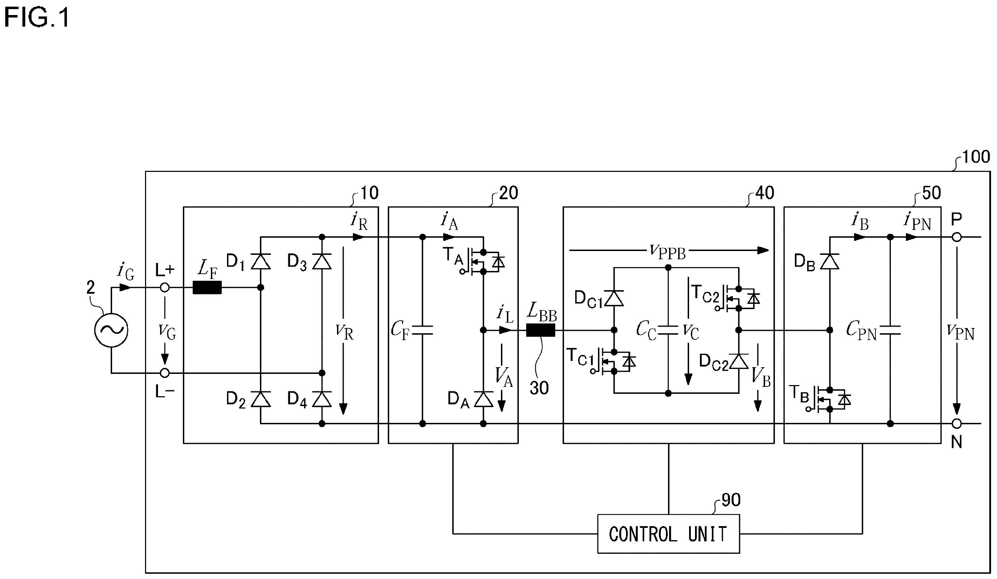

FIG. 1 is a functional block diagram of an AC-DC converter 100 according to a first embodiment. The AC-DC converter 100 functions as a converter that converts power supply electricity from a single-phase AC power supply 2 into output DC electricity. The output DC electricity is directly used or is converted into three-phase AC electricity by an inverter to be used to drive various devices, such as pumps, compressors, electric actuators for ships and aircrafts, and robot arms. The AC-DC converter 100 includes a rectifier circuit 10, a step-down circuit 20, an inductor 30, a buffer circuit 40, a step-up circuit 50, and a control unit 90.

The single-phase AC power supply 2 may be a commercial power supply or a power generator, for example. The single-phase AC power supply 2 outputs an input voltage v_{G} and an input current i_{G} to the rectifier circuit 10 of the AC-DC converter 100.

The rectifier circuit 10 is a rectifier circuit that has a power factor correction (PFC) function, and may be implemented using a publicly-known technology. The rectifier circuit 10 performs full-wave rectification of the input voltage v_{G} input from the single-phase AC power supply 2 to generate a rectified voltage v_{R} (rectified current i_{R}). Thereafter, the rectifier circuit 10 removes a highfrequency component from the current waveform by means of the PFC function. The rectifier circuit 10 outputs the rectified voltage v_{R} and the rectified current i_{R} to the step-down circuit 20.

The step-down circuit 20 is disposed subsequent to the rectifier circuit 10 and includes a capacitor C_{F}, a switch T_{A}, and a diode D_{A}. With the switch T_{A} controlled by the control unit 90, the step-down circuit 20 steps down the rectified voltage v_{R} to a step-down circuit voltage v_{A}. The step-down circuit 20 outputs an inductor current i_{L} to the inductor 30. The step-down operation performed by the step-down circuit 20 will be detailed later.

The inductor 30 is a circuit element disposed subsequent to the step-down circuit 20 and may be implemented using a publicly-known technology. The inductor 30 accumulates or releases magnetic energy caused by the inductor current i_{L}.

The buffer circuit 40 is disposed subsequent to the inductor 30. The buffer circuit 40 includes an asymmetric full-bridge circuit including a combination of a preceding-side half bridge configured to include a diode D_{C1} and a switch T_{C1}, and a subsequent-side half bridge configured to include a diode D_{C2} and a switch T_{C2}, with a capacitor C_{C} provided between the half bridges. The buffer circuit 40 is connected in series within the AC-DC converter 100 and actively compensates for pulsation of the input electricity. Accordingly, the buffer circuit 40 may be referred to as a "series active buffer", or "series power pulsation buffer" or "SPPB". The diodes D_{C1} and D_{C2} may be implemented using a publicly-known technology. Each of the switches T_{C1} and T_{C2} may be implemented by means of a metal-oxide semiconductor field effect transistor (MOS-FET), or may be implemented by means of a wide band gap (WBG) semiconductor, such as gallium nitride (GaN) and silicon carbide (SiC), for higher speed, depending on the required switching speed. The capacitor C_{C} is a low-capacity capacitor constituted by a film capacitor or a ceramic capacitor, for example, and need not be a high-capacity electrolytic capacitor.

The step-up circuit 50 is disposed subsequent to the buffer circuit 40 and includes a DC link capacitor C_{PN}, a switch T_{B}, and a diode D_{B}. With the switch T_{B} controlled by the control unit 90, the step-up circuit 50 steps up a buffer capacitor voltage v_{C} to a step-up circuit voltage v_{B}. The DC link capacitor C_{PN} is a low-capacity capacitor constituted by a film capacitor or a ceramic capacitor, for example, and need not be a high-capacity electrolytic capacitor. The DC link capacitor C_{PN} removes noise caused by switching or the like from the step-up circuit voltage v_{B} and generates a DC link voltage v_{PN}, which is smooth. The step-up circuit 50 outputs the DC link voltage v_{PN} thus generated, i.e., an output voltage v_{PN}, to the outside. The step-up operation performed by the step-up circuit 50 will be detailed later.

The control unit 90 includes a buffer voltage controller 92, a DC link voltage controller 94, an inductor voltage controller 96, and a PWM unit 98. The control unit 90 controls the step-down circuit 20, the buffer circuit 40, and the step-up circuit 50 to adjust the rectified voltage, the buffer voltage, and the DC link voltage. The control performed by the control unit 90 will be detailed later.

### Voltage Control in Comparative Example

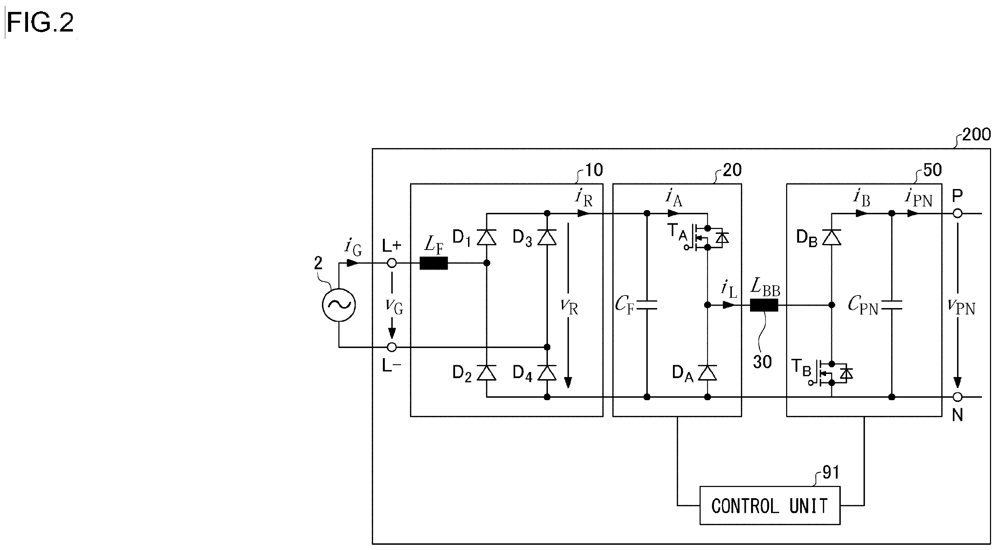

Before the voltage control performed by the AC-DC converter according to the embodiment is described, voltage control performed by an AC-DC converter according to a comparative example will be described. FIG. 2 is a functional block diagram of an AC-DC converter 200 according to the comparative example. The differences from the AC-DC converter 100 illustrated in FIG. 1 are that the buffer circuit 40 is not provided and that the DC link capacitor C_{PN} is constituted by a high-capacity electrolytic capacitor. In the AC-DC converter 200, the DC link capacitor C_{PN} compensates for pulsation of input electricity and functions as an energy buffer. The buffer circuit 40 of the AC-DC converter 100, on the other hand, merely compensates for pulsation of input electricity and does not function as an energy buffer. A control unit 91 in the AC-DC converter 200 controls the step-down circuit 20 and the step-up circuit 50 to adjust the rectified voltage and the DC link voltage. The other configurations in the AC-DC converter 200 are identical with those in the AC-DC converter 100.

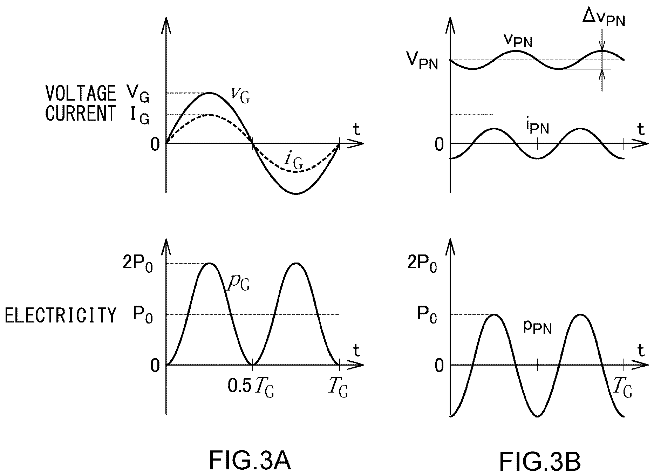

FIG. 3A shows time variations of the input voltage v_{G}, the input current i_{G}, and input electricity p_{G} in the AC-DC converter 200. FIG. 3B shows time variations of the DC link voltage v_{PN}, a DC link capacitor current i_{PN}, and DC link capacitor electricity p_{PN} in the AC-DC converter 200.

In the present specification, the input voltage (the AC voltage supplied from the single-phase AC power supply 2) v_{G} is defined as a sine wave with amplitude v_{G} and a frequency f_{G}, and is expressed as follows. ${v}_{G} = {V}_{G} ⋅ sin \left(2{πf}_{G}t\right)$ To satisfy the condition of "power factor = 1", the input current i_{G} is controlled to be a sine wave of which the frequency and the phase are identical with those of the input voltage v_{G}. More specifically, when the amplitude is set to I_{G}, the input current i_{G} is expressed as follows. ${i}_{G} = {I}_{G} ⋅ sin \left(2{πf}_{G}t\right)$ Accordingly, the input electricity p_{G} input to the rectifier circuit 10 is expressed as follows. ${p}_{G} = {v}_{G} ⋅ {i}_{G} = {V}_{G} ⋅ sin \left(2{πf}_{G}t\right) ⋅ {I}_{G} ⋅ sin \left(2{πf}_{G}t\right) = {P}_{0} ⋅ \left(1-cos\left(2π⋅2{f}_{G}t\right)\right) ,$ where ${P}_{0} = {V}_{G} ⋅ {I}_{G} / 2$ Thus, the input electricity p_{G} pulsates with a frequency 2f_{G} that is twice the frequency f_{G} of the input voltage v_{G}.

As described below, the DC link capacitor C_{PN} compensates for the pulsation of the input voltage v_{G} by buffering. The DC link capacitor C_{PN} accumulates electrostatic energy E_{C} therein. ${E}_{C} = 1 / 2 ⋅ {C}_{PN} ⋅ {{v}_{PN}}^{2} ,$ where C_{PN} is the capacity of the DC link capacitor C_{PN} Accordingly, a capacitor current i_{C} flows through the DC link. In the DC link voltage v_{PN}, DC link voltage pulsation Δv_{PN} occurs. The DC link voltage pulsation Δv_{PN} vibrates with a frequency 2f_{G} that is twice the frequency f_{G} of the input voltage v_{G}. The DC link voltage pulsation Δv_{PN} is dependent on average output electricity <p_{PN}>, an average DC link voltage <v_{PN}>, the frequency f_{G} of the input voltage v_{G}, and the capacity C_{PN} of the DC link capacitor C_{PN}, and is expressed as follows. ${Δv}_{PN} = \left(\left〈{p}_{PN}\right〉/2{πf}_{G}\right) ⋅ \left(1/\left(\left〈{v}_{PN}\right〉⋅{C}_{PN}\right)\right)$ Accordingly, to compensate for and restrain the pulsation, the capacity C_{PN} of the DC link capacitor C_{PN} needs to be sufficiently large. To achieve normal inverter functions, the DC link voltage pulsation Δv_{PN} generally needs to be kept within a few percent of the average DC link voltage v_{PN}. For example, when P₀ is 5 kW, v_{PN} is 100 V, and f_{G} is 50 Hz, it is found that the capacity of the DC link capacitor C_{PN} needs to be about 3 mF or greater in order to keep Δv_{PN}/V_{PN} within 5 percent. For this significantly large capacity, a high-capacity electrolytic capacitor is required. Such a high-capacity electrolytic capacitor has problems of having a larger size and shorter life. Therefore, the capacity of the DC link capacitor needs to be made small, and the entire device is required to be configured without an electrolytic capacitor.

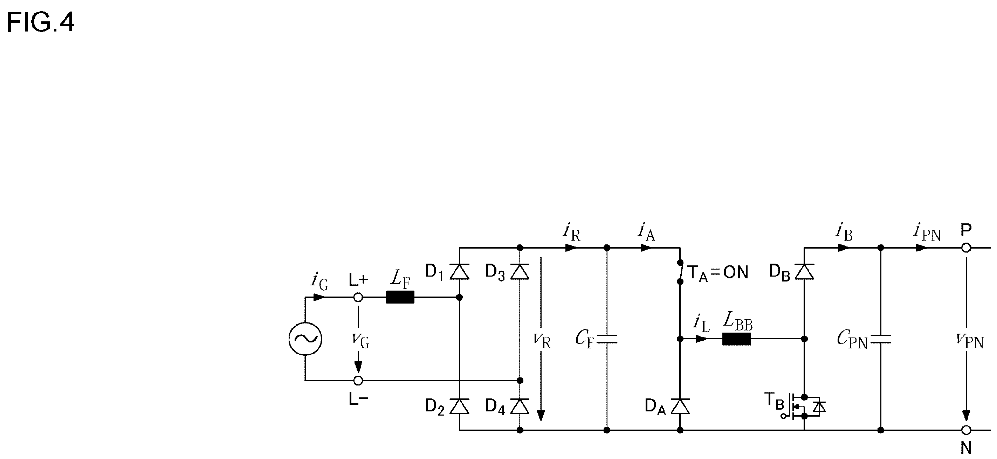

FIG. 4 illustrates the AC-DC converter 200 during the step-up operation. The control unit 91 controls the step-down circuit 20 and the step-up circuit 50 such that the step-up operation is performed when the rectified voltage v_{R} is smaller than the DC link voltage v_{PN} (v_{R} < v_{PN}). During the step-up operation, the switch T_{A} in the step-down circuit 20 is continuously turned on (T_{A} = ON). Accordingly, a step-down duty cycle d_{A} is 1 (d_{A} = 1). Meanwhile, the switch T_{B} in the step-up circuit 50 operates at a high frequency (HF) (T_{B} = HF). The modulation rate m_{I} is v_{R}/v_{PN}, with which a step-up duty cycle d_{B} is calculated (d_{B} = m_{I} = v_{R/}v_{PN}). To perform the PFC operation, the rectified current i_{R} is controlled to be proportional to the rectified voltage v_{R} (i_{R} ∝ v_{R}). At the time, the rectified current i_{R} is equal to the input current i_{G} (i_{R} = i_{G}). As describe above, since the switch T_{A} is continuously turned on during the step-up operation, the rectified current i_{R} becomes equal to the inductor current i_{L}. Accordingly, i_{L} = i_{A} = i_{R} = i_{G} holds. As described above, by performing high frequency control of the switch T_{B} in the step-up circuit 50 such that i_{L} = i_{G} holds, the PFC rectification and the step-up operation can be simultaneously performed.

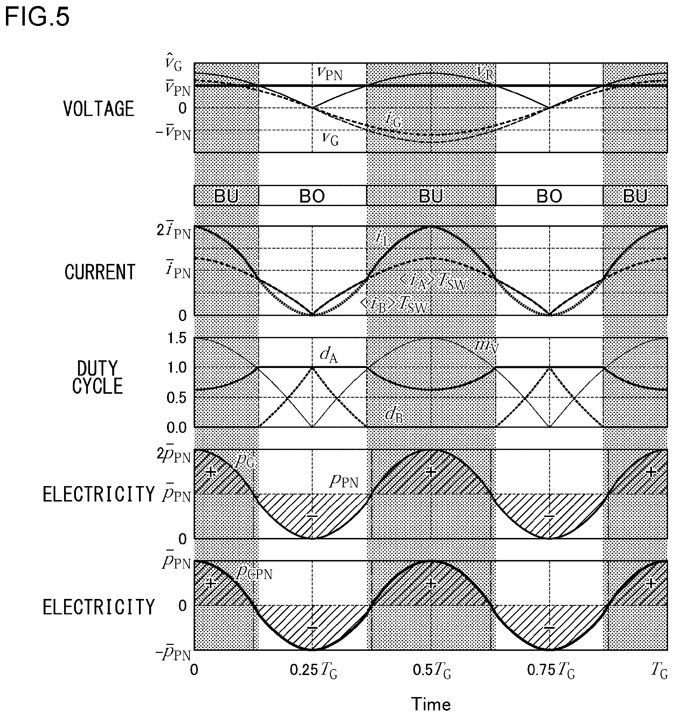

FIG. 5 (not hatched area) shows time variations of the input voltage v_{G}, the rectified voltage v_{R}, the DC link voltage v_{PN}, the input current i_{G}, the inductor current i_{L}, an average step-down circuit current <i_{A}>T_{SW}, an average step-up circuit current <i_{B}>T_{SW}, the step-down duty cycle d_{A}, the step-up duty cycle d_{B}, output electricity p_{PN}, and DC link capacitor electricity p_{CPN} during the step-up operation. In the above, <i_{A}>T_{SW} means a time average of the current i_{A} within a switching period T_{SW} (the same applies hereinafter). In the following, a time average within a switching period will be abbreviated as an "average".

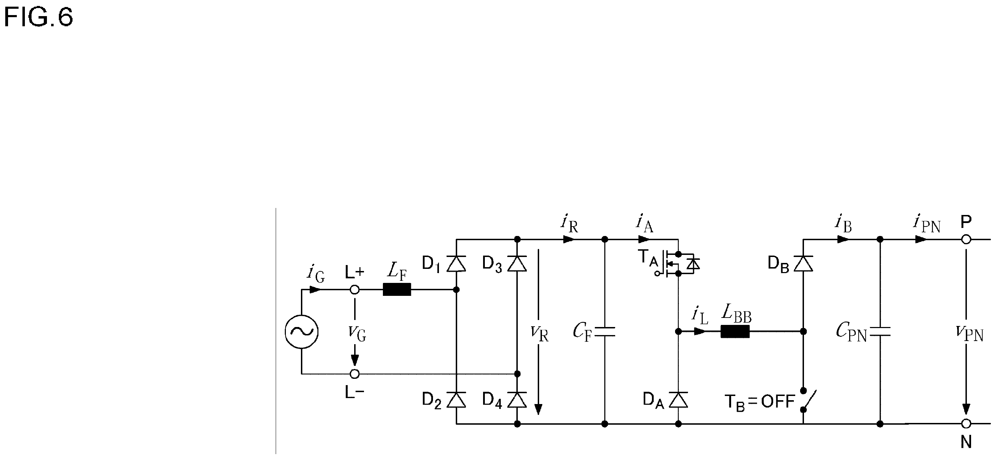

FIG. 6 illustrates the AC-DC converter 200 during the step-down operation. The control unit 91 controls the step-down circuit 20 and the step-up circuit 50 such that the step-down operation is performed when the rectified voltage v_{R} is larger than the DC link voltage v_{PN} (v_{R} > v_{PN}). During the step-down operation, the switch T_{B} in the step-up circuit 50 is continuously turned off (T_{B} = OFF). Accordingly, the step-up duty cycle d_{B} is 0 (d_{B} = 0). Meanwhile, the switch T_{A} in the step-down circuit 20 operates at a high frequency (T_{A} = HF). The modulation rate m_{I} is v_{R/}v_{PN}, with which the step-down duty cycle d_{A} is calculated (d_{A} = m_{I} = v_{R}/v_{PN}). To perform the PFC operation, the rectified current i_{R} is controlled to be proportional to the rectified voltage v_{R} (i_{R} ∝ v_{R}). Differently from the step-up operation, since the switch T_{A} operates at a high frequency, the inductor current i_{L} is not equal to the rectified current i_{R} but is equal to a step-up circuit current i_{B} (i_{L} ≠ i_{R}, i_{L} = i_{B} = i_{CPN}+i_{PN}). The electricity p_{CPN} of the DC link capacitor C_{PN} pulsates within ±p_{PN} to compensate for the pulsation of the input electricity. Accordingly, the current i_{CPN} of the DC link capacitor C_{PN} also pulsates within ±i_{PN}. As described above, by performing high frequency control of the switch T_{A} in the step-down circuit 20 such that i_{L} = i_{CPN}+i_{PN} holds, the PFC rectification and the step-down operation can be simultaneously performed.

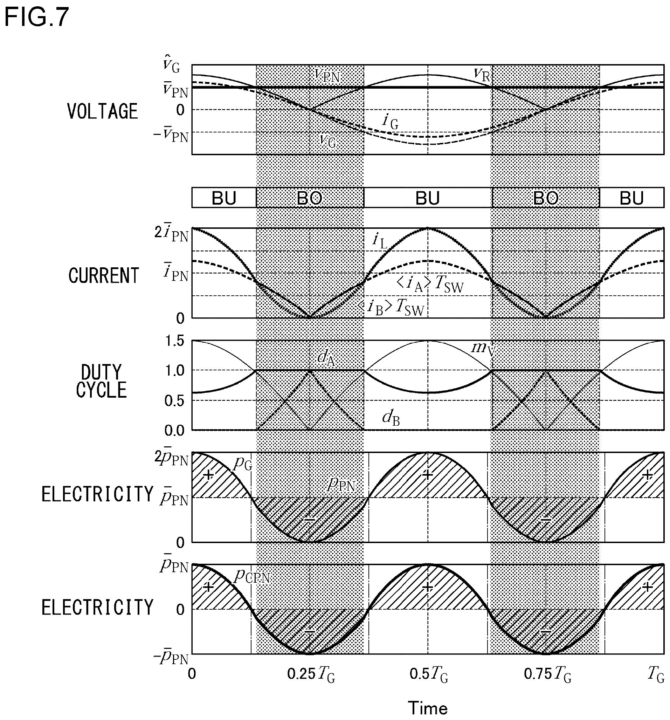

FIG. 7 (not hatched area) shows time variations of the input voltage v_{G}, rectified voltage v_{R}, DC link voltage v_{PN}, input current i_{G}, inductor current i_{L}, average step-down circuit current <i_{A}>T_{SW}, average step-up circuit current <i_{B}>T_{SW}, step-down duty cycle d_{A}, step-up duty cycle d_{B}, output electricity p_{PN}, and DC link capacitor electricity p_{CPN} during the step-down operation.

### Voltage Control in Embodiment

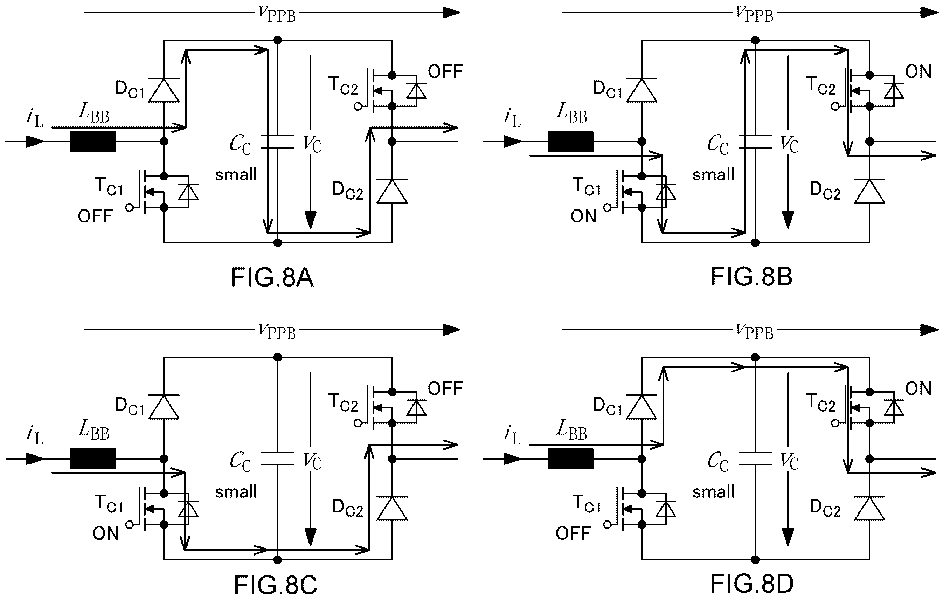

The voltage control in the embodiment will now be described. The buffer circuit 40 in the AC-DC converter 100 illustrated in FIG. 1 can perform four types of current control by combining ON and OFF of the switches T_{C1} and T_{C2}. FIG. 8A illustrates first current control performed by the buffer circuit 40. During the first current control, the switches T_{C1} and T_{C2} are both turned off. The inductor current i_{L} flows through the two diodes D_{C1} and D_{C2}, conducting electricity through the capacitor C_{C} in the positive direction. At the time, i_{CC} = i_{L} holds, and the capacitor C_{C} is charged. Thus, in the first current control, the buffer circuit 40 can use excess voltage in the input for charging. The first current control corresponds to a state in which a positive electricity pulsation buffer voltage v_{PPB} is applied in series with the inductor 30. FIG. 8B illustrates second current control performed by the buffer circuit 40. During the second current control, the switches T_{C1} and T_{C2} are both turned on. The inductor current i_{L} flows through the two switches T_{C1} and T_{C2}, conducting electricity through the capacitor C_{C} in the negative direction. At the time, i_{CC} = -i_{L} holds, and the capacitor C_{C} is discharged. Thus, in the second current control, the buffer circuit 40 can provide the charged electric charges to the output side. The second current control corresponds to a state in which a negative electricity pulsation buffer voltage v_{PPB} is applied in series with the inductor 30. FIGS. 8C and 8D respectively illustrate third and fourth current control performed by the buffer circuit 40. During the third current control, the switch T_{C1} is turned on, and the switch T_{C2} is turned off. During the fourth current control, the switch T_{C1} is turned off, and the switch T_{C2} is turned on. During the third and fourth current control, the inductor current i_{L} flows bypassing the capacitor C_{C}. At the time, i_{CC} = 0 holds, and the capacitor C_{C} is neither charged nor discharged. Each of the third and fourth current control corresponds to a state in which zero voltage is applied in series with the inductor 30.

In the AC-DC converter 200, the modulation rate m_{I} is calculated as ratio of the rectified voltage v_{R} to the output voltage (DC link voltage) v_{PN} (m_{I} = v_{R}/v_{PN}). Such a method of calculating the modulation rate based on voltage ratio may be sometimes called a "voltage conversion approach". Meanwhile, in the AC-DC converter 100, the modulation rate m_{I} is calculated as ratio of the rectified current i_{R} to an average value <i_{B}>T_{SW} of the step-up circuit current i_{B} within a switching period (m_{I} = i_{R}/<i_{B}>T_{SW}). Such a method of calculating the modulation rate based on current ratio may be sometimes called a "current conversion approach".

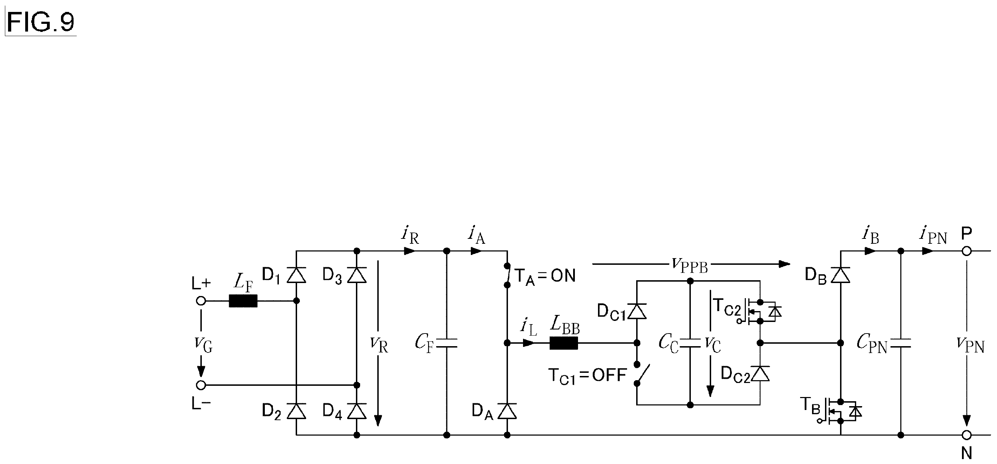

FIG. 9 illustrates the AC-DC converter 100 during the step-up operation. The control unit 90 controls the step-down circuit 20, the buffer circuit 40, and the step-up circuit 50 such that the step-up operation is performed when the rectified current i_{R} is larger than the average step-up circuit current <i_{B}>T_{SW} (i.e., when m_{I} > 1 holds). During the step-up operation, the switch T_{A} in the step-down circuit 20 is continuously turned on (T_{A} = ON). Accordingly, the step-down duty cycle d_{A} is 1 (d_{A} = 1).

Meanwhile, the switch T_{B} in the step-up circuit 50 operates at a high frequency (T_{B} = HF). To perform the PFC operation, the rectified current i_{R} is controlled to be proportional to the rectified voltage v_{R} (i_{R} ∝ v_{R}). At the time, the rectified current i_{R} is equal to the input current i_{G} (i_{R} = i_{G}). As describe above, since the switch T_{A} is continuously turned on during the step-up operation, the rectified current i_{R} becomes equal to the inductor current i_{L}. Accordingly, i_{L} = i_{A} = i_{R} = i_{G} holds. As a result of the step-up operation, the inductor current i_{L} is converted into the step-up circuit current i_{B}. The average step-up circuit current <i_{B}>T_{SW} is equal to an average output current (average DC link current) <i_{PN}>T_{SW} (<i_{B}>T_{SW} = <i_{PN}>T_{SW}). $\left〈{v}_{B}\right〉 {T}_{SW} ⋅ {i}_{L} = {v}_{PN} ⋅ \left〈{i}_{B}\right〉 {T}_{SW}$ Electricity balance equation and hence, ${i}_{L} = \left({v}_{PN}⋅\left〈{i}_{B}\right〉{T}_{SW}\right) / \left〈{v}_{B}\right〉 {T}_{SW}$ Since v_{PN} and <i_{B}>T_{SW} are known, by performing high frequency operation of the switch T_{B} in the step-up circuit 50 such that i_{L}=i_{A} holds and controlling <v_{B}>T_{SW}, the PFC rectification can be performed. Also, based on the electricity balance equation provided above, ${i}_{L} = \left({v}_{PN}/\left〈{v}_{B}\right〉{T}_{SW}\right) ⋅ \left〈{i}_{B}\right〉 {T}_{SW}$ can be derived. Accordingly, when v_{PN} > <v_{B}>T_{SW} holds (i.e., when the low voltage <v_{B}>T_{SW} is stepped up to the high voltage v_{PN}), the inductor current i_{L} (i.e., the rectified current i_{R}) is found to be larger than the average step-up circuit current <i_{B}>T_{SW}. Thus, in the AC-DC converter 100, when the rectified current i_{R} is larger than the average step-up circuit current <i_{B}>T_{SW} (i.e., when m_{I} > 1 holds), the step-up operation is performed, irrespective of the ratio of the rectified voltage v_{R} to the output voltage (DC link voltage) v_{PN}.

During the step-up operation, the control unit 90 continuously turns off the switch T_{C1} and controls the buffer circuit 40 such that the switch T_{C2} operates at a high frequency (T_{C1} = OFF, T_{C2} = HF). At the time, the buffer circuit 40 switches the first current control (charging) and the fourth current control (no charging and no discharging) at a high frequency. Accordingly, the buffer circuit 40 functions as a voltage source, enabling output of a constant output voltage v_{PN}.

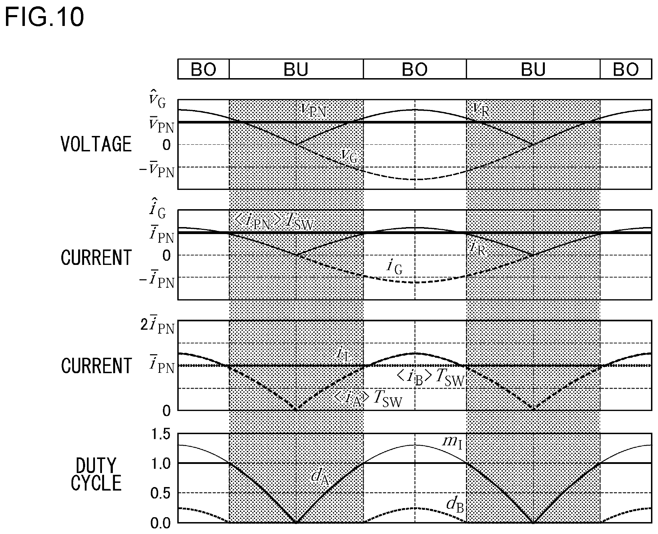

FIG. 10 (not hatched area) shows time variations of the input voltage v_{G}, rectified voltage v_{R}, DC link voltage v_{PN}, input current i_{G}, inductor current i_{L}, average step-down circuit current <i_{A}>T_{SW}, average step-up circuit current <i_{B}>T_{SW}, step-down duty cycle d_{A}, and step-up duty cycle d_{B} during the step-up operation.

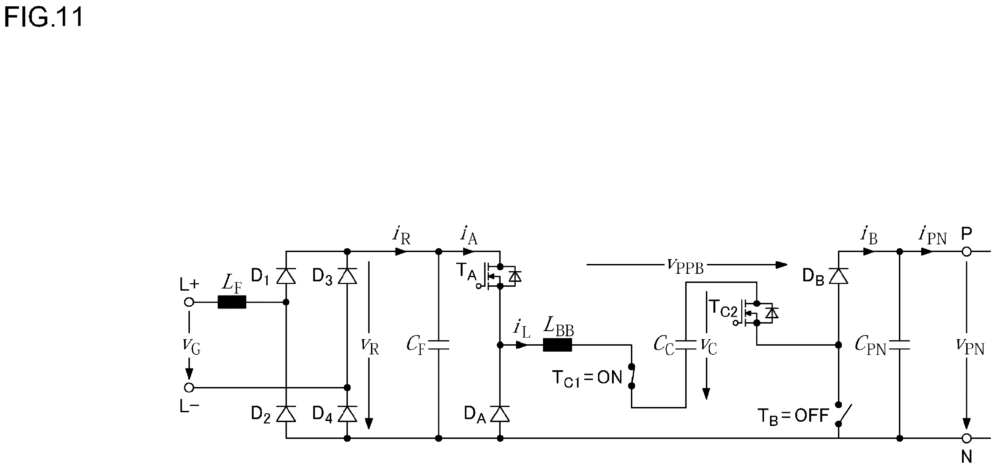

FIG. 11 illustrates the AC-DC converter 100 during the step-down operation. The control unit 90 controls the step-down circuit 20, the buffer circuit 40, and the step-up circuit 50 such that the step-down operation is performed when the rectified current i_{R} is smaller than the average step-up circuit current <i_{B}>T_{SW} (i.e., when m_{I} < 1 holds). During the step-down operation, the switch T_{B} in the step-up circuit 50 is continuously turned off (T_{B} = OFF). Accordingly, the step-up duty cycle d_{B} is 0 (d_{B} = 0). Meanwhile, the switch T_{A} in the step-down circuit 20 operates at a high frequency (T_{A} = HF). To perform the PFC operation, the rectified current i_{R} is controlled to be proportional to the rectified voltage v_{R} (i_{R} ∝ v_{R}). At the time, the inductor current i_{L} is equal to the step-up circuit current i_{B} (i_{L} = i_{B}). Also, the rectified current i_{R} is equal to the average step-down circuit current <i_{A}>T_{SW} (i_{R} = <i_{A}>T_{SW}). ${v}_{R} ⋅ \left〈{i}_{A}\right〉 {T}_{SW} = \left〈{v}_{A}\right〉 {T}_{SW} ⋅ {i}_{L}$ Electricity balance equation and hence, $\left〈{i}_{A}\right〉 {T}_{SW} = {i}_{L} ⋅ \left〈{v}_{A}\right〉 {T}_{SW} / {v}_{R}$ Since v_{R} and i_{L} are known, by performing high frequency operation of the switch T_{A} in the step-down circuit 20 such that <i_{A}>T_{SW} = i_{R} holds and controlling <v_{A}>T_{SW}, the PFC rectification can be performed. Also, based on the electricity balance equation provided above, $\left〈{i}_{A}\right〉 {T}_{SW} = \left(\left〈{v}_{A}\right〉{T}_{SW}/{v}_{R}\right) ⋅ {i}_{L}$ can be derived. Accordingly, when <v_{A}>T_{SW} < v_{R} holds (i.e., when the high voltage v_{R} is stepped down to the low voltage <v_{A}>T_{SW}), the average step-down circuit current <i_{A}>T_{SW} (i.e., the rectified current i_{R}) is found to be smaller than the inductor current i_{L} (i.e., the step-up circuit current <i_{B}>T_{SW}). Thus, in the AC-DC converter 100, when the rectified current i_{R} is smaller than the average step-up circuit current <i_{B}>T_{SW} (i.e., when m_{I} < 1 holds), the step-down operation is performed, irrespective of the ratio of the rectified voltage v_{R} to the output voltage (DC link voltage) v_{PN}.

During the step-down operation, the control unit 90 continuously turns on the switch T_{C1} and controls the buffer circuit 40 such that the switch T_{C2} operates at a high frequency (T_{C1} = ON, T_{C2} = HF). At the time, the buffer circuit switches the second current control (discharging) and the third current control (no charging and no discharging) at a high frequency. Accordingly, the buffer circuit 40 functions as a voltage source, enabling output of the output voltage v_{PN}.

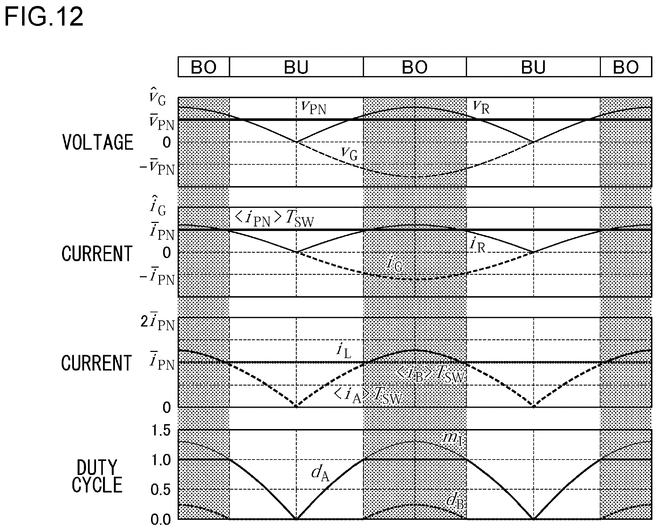

FIG. 12 (not hatched area) shows time variations of the input voltage v_{G}, rectified voltage v_{R}, DC link voltage v_{PN}, input current i_{G}, inductor current i_{L}, average step-down circuit current <i_{A}>T_{SW}, average step-up circuit current <i_{B}>T_{SW}, step-down duty cycle d_{A}, and step-up duty cycle d_{B} during the step-down operation.

As described previously, the inductor current i_{L} is expressed as follows.
When i_{R} > <i_{B}>T_{SW} (during the step-up operation), i_{L} = i_{R},
when i_{R} < <i_{B}>T_{SW} (during the step-down operation), i_{L} = <i_{B}>T_{SW},
   and hence, ${i}_{L} = max \left({i}_{R},\left〈{i}_{B}\right〉{T}_{SW}\right) ,$
where max(a,b) means a larger value between a and b. As shown in FIGS. 5, 7, 10, and 12, the inductor current i_{L} obtained in this manner is smaller than the inductor current i_{L} obtained in the AC-DC converter 200.

The step-down duty cycle d_{A} and the step-up duty cycle d_{B} are defined with the modulation rate m_{I} as follows. ${d}_{A} = min \left({m}_{I}, 1\right)$ ${d}_{B} = 1 - min \left(1/{m}_{I},1\right)$ where min(a,b) means a smaller value between a and b

To keep the electricity balance of the inductor 30 and prevent variation of the inductor current i_{L}, the buffer circuit 40 applies the buffer voltage v_{PPB} that satisfies the following condition. $\left〈{v}_{PPB}\right〉 {T}_{SW} = \left〈{v}_{A}\right〉 {T}_{SW} - \left〈{v}_{B}\right〉 {T}_{SW}$ Each of the switch node voltage <v_{A}>T_{SW} in the step-down operation and the switch node voltage <v_{B}>T_{SW} in the step-up operation is defined by the modulation rate m_{I}.

As described below, a buffer duty cycle d_{c} is defined as ratio of the average buffer voltage <v_{PPB}>T_{SW} to the buffer capacitor voltage v_{C}. ${d}_{C} = \left〈{v}_{PPB}\right〉 {T}_{SW} / {v}_{C}$ It should be noted that $\left|\left〈{v}_{PPB}\right〉{T}_{SW}\right| < \left|{v}_{C}\right| \left(i.e., -1<{d}_{C}<1\right)$ always holds. Accordingly, the minimum value of the buffer capacitor voltage v_{C} is defined by the maximum value of the average buffer voltage <v_{PPB}>T_{SW}. Also, even when the rectified voltage v_{R} is zero, the buffer circuit 40 needs to fully compensate for the DC link voltage v_{PN}. Therefore, ${v}_{C} > {v}_{PN}$ always holds.

A duty cycle d_{C1} of the preceding-side half bridge (hereinafter, referred to as the "first buffer duty cycle d_{C1}") and a duty cycle d_{C2} of the subsequent-side half bridge (hereinafter, referred to as the "second buffer duty cycle d_{C2}") in the buffer circuit 40 are obtained based on the buffer duty cycle d_{C}. The buffer duty cycle d_{C} vibrates with a frequency that is twice the frequency of pulsation of the input electricity p_{G}. When d_{C} > 0, the buffer capacitor C_{C} is connected to the inductor 30 in the positive direction (T_{C1} = OFF, T_{C2} = OFF), and excess electricity in the input is used for charging in the buffer circuit 40. When d_{C} < 0, on the other hand, the buffer capacitor C_{C} is connected to the inductor 30 in the negative direction (T_{C1} = ON, T_{C2} = ON), and charged electric charges are discharged to the output side. Thus, it is found that the polarity of the buffer voltage v_{PPB} is determined based on the preceding-side half bridge in the buffer circuit 40. More specifically, when the duty cycle d_{C} is positive, T_{C1} = OFF (d_{C1} = 0) always holds; when the duty cycle d_{C} is negative, T_{C1} = ON (d_{C1} = 1) always holds. Meanwhile, the subsequent-side half bridge in the buffer circuit 40 is subjected to pulse width modulation at a high frequency. This controls the magnitude of energy accumulated in the buffer circuit 40 (or released from the buffer circuit 40). The second buffer duty cycle d_{C2} is obtained as follows. ${d}_{C 2} = 1 - {d}_{C 1} - {d}_{C}$

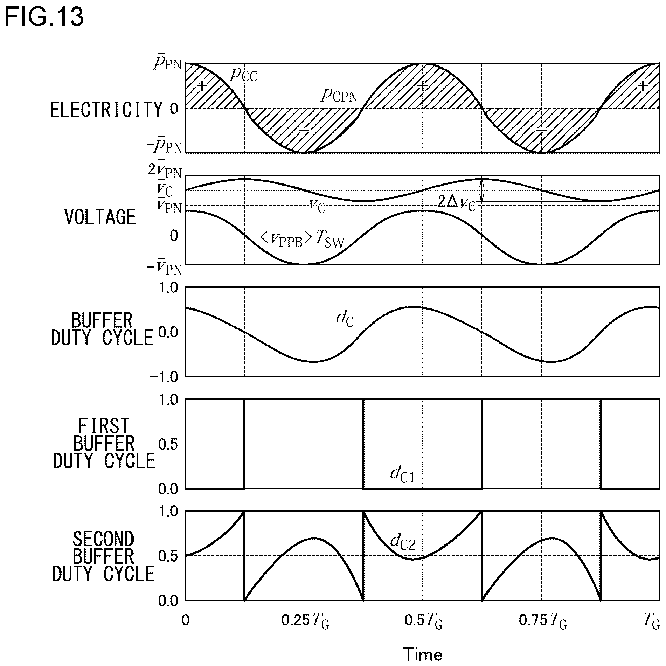

FIG. 13 shows time variations of buffer capacitor electricity p_{CC}, the DC link capacitor electricity p_{CPN}, the buffer capacitor voltage v_{C}, the average buffer voltage <v_{PPB}>T_{SW}, the buffer duty cycle d_{C}, the first buffer duty cycle d_{C1}, and the second buffer duty cycle d_{C2}.

As described above, calculating the step-down duty cycle d_{A}, the step-up duty cycle d_{B}, the first buffer duty cycle d_{C1}, and the second buffer duty cycle d_{C2} and controlling the step-down circuit 20, the buffer circuit 40, and the step-up circuit 50 can compensate for the pulsation of the input AC electricity and generate a desired magnitude of DC electricity. Since the capacitor C_{C} in the buffer circuit 40 need not have large capacity, the capacitor C_{C} can be implemented by a film capacitor or a ceramic capacitor, for example, instead of an electrolytic capacitor.

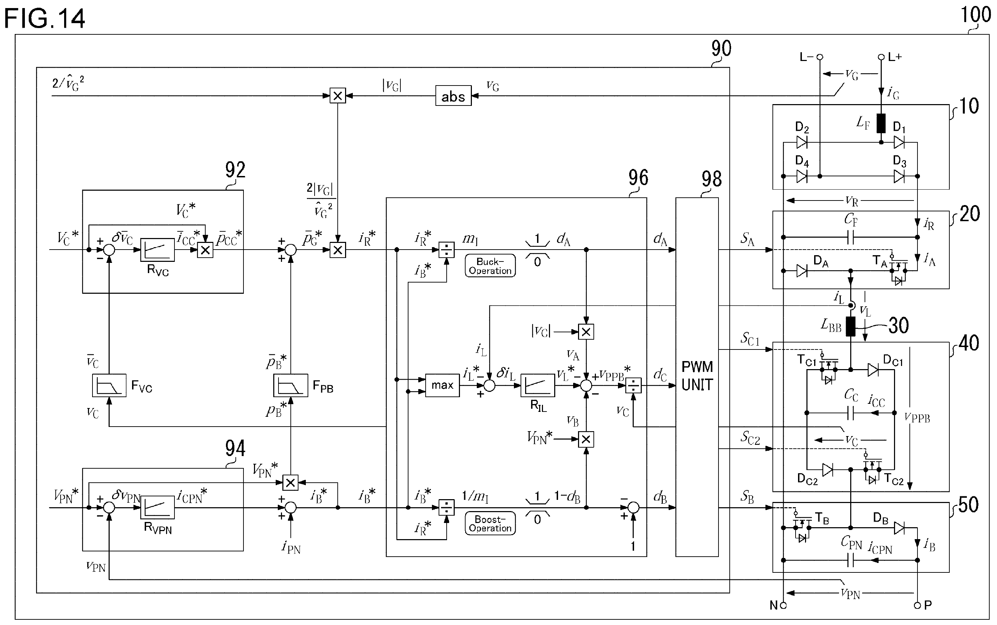

There will now be detailed the control performed by the control unit 90 in the AC-DC converter 100 with reference to FIG. 14. FIG. 14 is a functional block diagram of the control unit 90 in the AC-DC converter 100. The control unit 90 includes the buffer voltage controller 92, the DC link voltage controller 94, the inductor voltage controller 96, and the PWM unit 98.

To the buffer voltage controller 92, a target buffer capacitor voltage v_{C}* is input and also an average buffer capacitor voltage <v_{C}> from a filter F_{VC} is input. The target buffer capacitor voltage v_{C}* thus input is branched into two voltages. From one of the two branched target buffer capacitor voltages v_{C}*, the average buffer capacitor voltage <v_{C}> is subtracted, so that an average buffer capacitor voltage difference δ<v_{C}> is calculated (δ<v_{C}> = v_{C}*-<v_{C}>). The average buffer capacitor voltage difference δ<v_{C}> is input to a voltage controller R_{VC} and converted into a target average buffer capacitor current <i_{CC}*> (δ<v_{C}> → <i_{CC}*>). The target average buffer capacitor current <i_{CC}*> is multiplied by the other of the two branched target buffer capacitor voltages v_{C}*, so that target average buffer capacitor electricity <p_{CC}*> is calculated (<p_{CC}*> = v_{C}*.<i_{CC}*>) . The target average buffer capacitor electricity <p_{CC}*> is added to average target step-up circuit electricity <P_{B}*> output from a filter F_{PB}, so that average target input electricity <p_{G}*> is calculated (<p_{G}*> = <P_{CC}*>+<P_{B}*>). The average target input electricity <p_{G}*> is multiplied by 2·|v_{G}|/<v_{G}>² (calculated by doubling the product of the absolute value of the input voltage, |v_{G}|, and the square of the reciprocal of an average input voltage <v_{G}>), so that a target rectified current i_{R}* is calculated (i_{R}* = <p_{G}*>·2·|v_{G}|/<VG>²). The target rectified current i_{R}* is output to the inductor voltage controller 96.

To the DC link voltage controller 94, a target DC link voltage v_{PN}* is input and also the DC link voltage v_{PN} from the step-up circuit 50 is input. The target DC link voltage v_{PN}* thus input is branched into two voltages. From one of the two branched target DC link voltages v_{PN}*, the DC link voltage v_{PN} is subtracted, so that a DC link voltage difference δv_{PN} is calculated (δv_{PN} = v_{PN}*-v_{PN}). The DC link voltage difference δv_{PN} is input to a voltage controller R_{vPN} and converted into a target capacitor current i_{CPN}* (δv_{PN} → i_{CPN}*). The target capacitor current i_{CPN}* is added to the capacitor current i_{CPN}, so that a target step-up circuit current i_{B}* is calculated (i_{B}* = i_{CPN}*+i_{CPN}). The target step-up circuit current i_{B}* is branched into two currents, and one of them is multiplied by the other of the two branched DC link voltages v_{PN}*, so that target step-up circuit electricity p_{B}* is calculated (p_{B}* = i_{B}*·v_{PN}*). The target step-up circuit electricity p_{B}* is input to the filter F_{PB}. From the filter F_{PB}, the average target step-up circuit electricity <p_{B}*> is output. The other of the two branched target step-up circuit currents i_{B}* is output to the inductor voltage controller 96.

To the inductor voltage controller 96, the target rectified current i_{R}*, the target step-up circuit current i_{B}*, the inductor current i_{L}, and the buffer capacitor voltage v_{C} are input. The target rectified current i_{R}* thus input is branched into three currents. One of the three branched target rectified currents i_{R}* is divided by the target step-up circuit current i_{B}*, so that the modulation rate m_{I} is calculated (m_{I} = i_{R}*/i_{B}*). By another of the three branched target rectified currents i_{R}*, the target step-up circuit current i_{B}* is divided, so that the reciprocal of the modulation rate, 1/m_{I}, is calculated (1/m_{I} = i_{B}*/i_{R}*). The other of the three branched target rectified currents i_{R}* is compared in value with the target step-up circuit current i_{B}*. Also, the target step-up circuit current i_{B}* input is branched into three currents. One of the three branched target step-up circuit currents i_{B}* is divided by the target rectified current i_{R}*, so that the reciprocal of the modulation rate, 1/m_{I}, is calculated (1/m_{I} = i_{B}*/i_{R}*). By another of the three branched target step-up circuit currents i_{B}*, the target rectified current i_{R}* is divided, so that the modulation rate m_{I} is calculated (m_{I} = i_{R}*/i_{B}*). The other of the three branched target step-up circuit currents i_{B}* is compared in value with the target rectified current i_{R}*. Also, the modulation rate m_{I} is compared in value with 1, and the resulting smaller value is defined as the step-down duty cycle d_{A} (d_{A} = min(m_{I},1)).

The step-down duty cycle d_{A} is branched into two cycles. One of the two branched step-down duty cycles d_{A} is output to the PWM unit 98. The reciprocal of the modulation rate, 1/m_{I}, is compared in value with 1, and the resulting smaller value is defined as an amount 1-d_{B} on which the step-up duty cycle d_{B} is based (1-d_{B} = min(1/m_{I},1)). The other of the two branched step-down duty cycles d_{A} is multiplied by the absolute value of the input voltage v_{G}, |v_{G}|, so that the step-down circuit voltage v_{A} is calculated (V_{A} = d_{A}·|v_{G}|). The amount 1-d_{B} on which the step-up duty cycle d_{B} is based is branched into two amounts. One of the two branched amounts 1-d_{B} is converted into the step-up duty cycle d_{B} and then output to the PWM unit 98 (1-d_{B} → d_{B}). The other of the two branched amounts 1-d_{B} is multiplied by the target DC link voltage v_{PN}*, so that the step-up circuit voltage v_{B} is calculated (v_{B} = (1-d_{B})·V_{PN}*). The target rectified current i_{R}* (the other of the three branched target rectified currents i_{R}*) is compared in value with the target step-up circuit current i_{B}* (the other of the three branched target step-up circuit currents i_{B}*), as described previously, and the resulting larger value is defined as a target inductor current i_{L}* (i_{L}* = max(i_{R}*, i_{B}*)). From the target inductor current i_{L}*, the inductor current i_{L} is subtracted, so that an inductor current difference δi_{L} is calculated (δi_{L} = i_{L}*-i_{L}). The inductor current difference δi_{L} is input to a voltage controller R_{IL} and converted into a target inductor voltage v_{L}* (δi_{L} → v_{L}*). From the step-down circuit voltage v_{A}, the step-up circuit voltage v_{B} and the target inductor voltage v_{L}* are subtracted, so that a target buffer voltage v_{PPB}* is calculated (v_{PPB}* = v_{A}-v_{B}-v_{L}*). The target buffer voltage v_{PPB}* is divided by the buffer capacitor voltage v_{C}, so that the buffer duty cycle d_{C} is calculated (d_{C} = v_{PPB}*/v_{C}). The buffer duty cycle d_{C} thus calculated is output to the PWM unit 98.

To the PWM unit 98, the step-down duty cycle d_{A}, the step-up duty cycle d_{B}, and the buffer duty cycle d_{C} are input. Based on the step-down duty cycle d_{A}, the step-up duty cycle d_{B}, and the buffer duty cycle d_{C}, the PWM unit 98 performs pulse width modulation to generate a step-down circuit switching signal S_{A}, a step-up circuit switching signal S_{B}, a first buffer switching signal S_{C1}, and a second buffer switching signal S_{C2}. The PWM unit 98 outputs the step-down circuit switching signal S_{A} to the step-down circuit 20, the step-up circuit switching signal S_{B} to the step-up circuit 50, and the first buffer switching signal S_{C1} and the second buffer switching signal S_{C2} to the buffer circuit 40.

According to the present embodiment, a desired magnitude of DC electricity can be generated from single-phase AC electricity, without requiring an electrolytic capacitor.

Each of the switches T_{C1} and T_{C2} in the buffer circuit 40 may be implemented by means of a WBG semiconductor, such as GaN and SiC. The switching speed of a WBG semiconductor is about ten times faster than that of a conventional Si-based MOS-FET. Accordingly, by using WBG semiconductors for the switches T_{C1} and T_{C2} in the buffer circuit 40, a desired magnitude of DC electricity can be generated from single-phase AC electricity with high frequency.

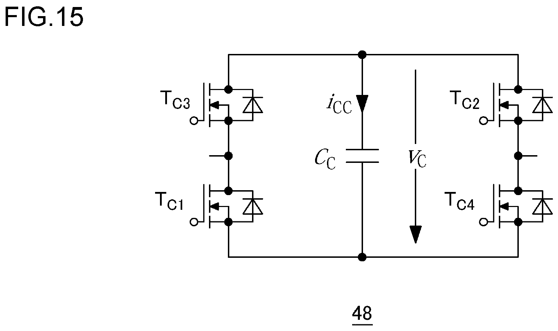

The buffer circuit may include an asymmetric full-bridge circuit including a combination of a preceding-side half bridge configured to include the switch T_{C1} and a switch T_{C3}, and a subsequent-side half bridge configured to include the switch T_{C2} and a switch T_{C4}, with the capacitor C_{C} provided between the half bridges. In other words, the buffer circuit may include T_{C3} instead of the diode D_{C1} of the buffer circuit 40 and may include the switch T_{C4} instead of the diode D_{C2} of the buffer circuit 40. FIG. 15 schematically illustrates a buffer circuit 48 configured in that way. As with the buffer circuit 40, the buffer circuit 48 enables the aforementioned four types of current control by combining ON and OFF of the switches T_{C1}, T_{C2}, T_{C3}, and T_{C4}. By using switches instead of diodes, faster switching can be performed. With this configuration, a desired magnitude of DC electricity can be generated from single-phase AC electricity with higher frequency.

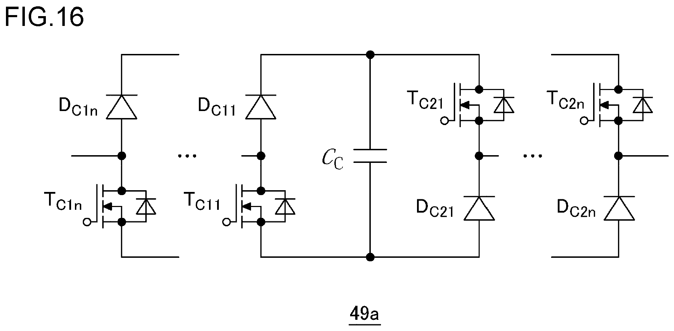

The buffer circuit may be configured by adding half bridges in parallel to the buffer circuit 40 illustrated in FIG. 1. FIG. 16 schematically illustrates a buffer circuit 49a configured in that way. The buffer circuit 49a includes an asymmetric full-bridge circuit including a combination of preceding-side half bridges configured to include diodes D_{C11}, D_{C12}, ..., and D_{C1n} and switches T_{C11}, T_{C12}, ..., and T_{C1n}, and subsequent-side half bridges configured to include diodes D_{C21}, D_{C22}, ..., and D_{C2n} and switches T_{C21}, T_{C22}, ..., and T_{C2n}, with the capacitor C_{C} provided between the half bridges, where n is an integer greater than or equal to 2. In other words, the buffer circuit 49a is configured by adding n preceding-side half bridges and n subsequent-side half bridges in parallel to the buffer circuit 40. As with the buffer circuit 40, the buffer circuit 49a also enables the aforementioned four types of current control by combining ON and OFF of the switches T_{C11}, T_{C12}, ..., and T_{C1n}, and the switches T_{C21}, T_{C22}, ..., and T_{C2n}. The buffer circuit 49a is configured by adding half bridges in parallel to a preceding-side half bridge and a subsequent-side half bridge, thereby reducing the switching load on each switch. Therefore, the switching speed of each switch may be slower than that of each switch in the buffer circuit 40. With this configuration, using switches of which the speed is relatively slow, a desired magnitude of DC electricity can be generated from single-phase AC electricity with high frequency.

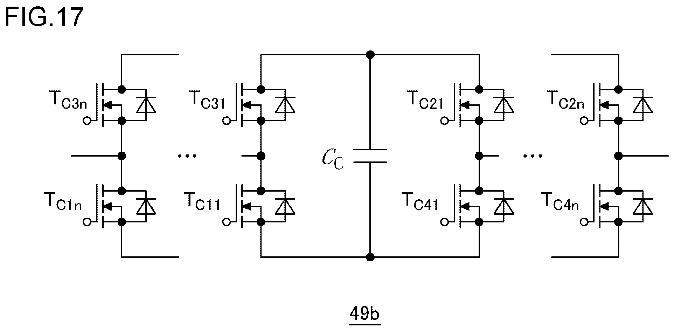

The buffer circuit may be configured by adding half bridges in parallel to the buffer circuit 48 illustrated in FIG. 15. FIG. 17 schematically illustrates a buffer circuit 49b configured in that way. The buffer circuit 49b includes an asymmetric full-bridge circuit including a combination of preceding-side half bridges configured to include the switches T_{C11}, T_{C12}, ..., and T_{C1n} and switches T_{C31}, T_{C32}, ..., and T_{C3n}, and subsequent-side half bridges configured to include the switches T_{C21}, T_{C22}, ..., and T_{C2n} and switches T_{C41}, T_{C42}, ..., and T_{C4n}, with the capacitor C_{C} provided between the half bridges, where n is an integer greater than or equal to 2. In other words, the buffer circuit 49b is configured by adding n preceding-side half bridges and n subsequent-side half bridges in parallel to the buffer circuit 48. As with the buffer circuit 48, the buffer circuit 49b also enables the aforementioned four types of current control by combining ON and OFF of the switches T_{C11}, T_{C12}, ..., and T_{C1n} and the switches T_{C31}, T_{C32}, ..., and T_{C3n}, and the switches T_{C21}, T_{C22}, ..., and T_{C2n} and the switches T_{C41}, T_{C42}, ..., and T_{C4n}. The buffer circuit 49b is configured by adding half bridges in parallel to a preceding-side half bridge and a subsequent-side half bridge, thereby reducing the switching load on each switch. Therefore, the switching speed of each switch may be slower than that of each switch in the buffer circuit 48. With this configuration, using switches of which the speed is relatively slow, a desired magnitude of DC electricity can be generated from single-phase AC electricity with higher frequency.

### Example

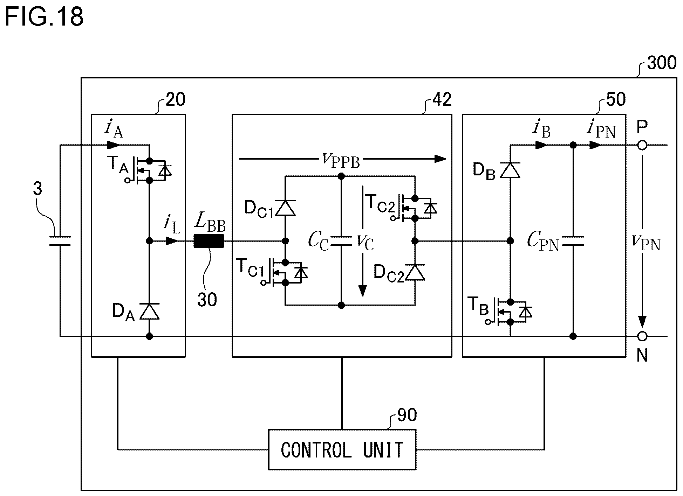

FIG. 18 is a functional block diagram of a DC-DC converter 300 according to an example not falling within the terms of the claims. The DC-DC converter 300 functions as a converter that converts electricity from a DC power supply 3 into other DC electricity. The converted DC electricity is directly used or is converted into three-phase AC electricity by an inverter to be used to drive various devices, such as pumps, compressors, electric actuators for ships and aircrafts, and robot arms. The DC-DC converter 300 includes the step-down circuit 20, the inductor 30, a buffer circuit 42, the step-up circuit 50, and the control unit 90. The DC-DC converter 300 differs from the AC-DC converter 100 in that the rectifier circuit 10 is not provided. Since the configurations and operations of the step-down circuit 20, the inductor 30, the step-up circuit 50, and the control unit 90 are identical with those in the AC-DC converter 100, the explanation thereof will be omitted.

The buffer circuit 42 includes an asymmetric full-bridge circuit including a combination of a preceding-side half bridge configured to include the diode D_{C1} and the switch T_{C1}, and a subsequent-side half bridge configured to include the diode D_{C2} and the switch T_{C2}, with the capacitor C_{C} provided between the half bridges. In the AC-DC converter 100, an input voltage at an input frequency of 50-60 kHz is input from a commercial single-phase AC power supply. In this case, each of the switches T_{C1} and T_{C2} in the buffer circuit 40 operates at a switching frequency in the range of 10 kHz to 100 kHz. Meanwhile, DC electricity supplied from a DC power supply does not contain pulsation with a large amplitude as AC electricity does, but contains waveform disturbance with a small amplitude, called ripple. The frequency of ripple generally ranges from 100 kHz to 200 kHz. Accordingly, to compensate for the ripple, each of the switches T_{C1} and T_{C2} in the buffer circuit 42 operates at a switching frequency that is about ten times the ripple frequency, i.e., in the range of 1 MHz to 2 MHz. Therefore, each of the switches T_{C1} and T_{C2} in the buffer circuit 42 is constituted by a high speed WBG semiconductor, such as GaN and SiC.

According to the example, a desired magnitude of DC electricity can be generated by compensating for the ripple in DC electricity from a DC power supply, without requiring an electrolytic capacitor.

### Second Embodiment

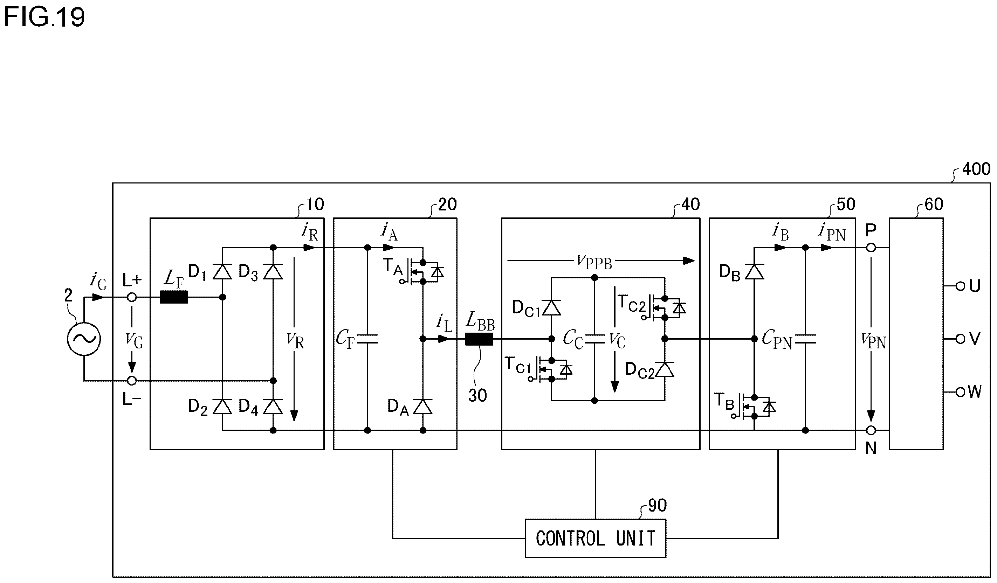

FIG. 19 is a functional block diagram of an AC-AC converter 400 according to a second embodiment.

The AC-AC converter 400 functions as a converter that converts electricity from the single-phase AC power supply 2 into three-phase AC electricity. The three-phase AC electricity thus converted is used to drive various devices, such as pumps, compressors, electric actuators for ships and aircrafts, and robot arms. The AC-AC converter 400 includes the rectifier circuit 10, the step-down circuit 20, the inductor 30, the buffer circuit 40, the step-up circuit 50, an inverter 60, and the control unit 90.

Since the configurations and operations of the rectifier circuit 10, the step-down circuit 20, the inductor 30, the buffer circuit 40, the step-up circuit 50, and the control unit 90 are identical with those in the AC-DC converter 100, the explanation thereof will be omitted.

The inverter 60 generates three-phase AC voltages from the DC link voltage v_{PN}. The inverter 60 may be implemented using a publicly-known technology. The three-phase AC voltages are constituted by a U phase, a V phase, and a W phase, which alternate with a phase difference of 2n/3, for example.

According to the present embodiment, a desired magnitude of three-phase AC electricity can be generated from single-phase AC electricity, without requiring an electrolytic capacitor.

The present invention has been described with reference to embodiments. The embodiments are intended to be illustrative only, and it will be obvious to those skilled in the art that various modifications and changes could be developed within the scope of claims of the present invention and that such modifications and changes also fall within the scope of claims of the present invention. Therefore, the description in the present specification and the drawings should be regarded as exemplary rather than limitative.

In the following, modifications will be described. In the drawings and description of the modifications, like reference characters denote like or corresponding constituting elements and members in the embodiments. Repetitive description already provided in the embodiments will be omitted as appropriate, and configurations different from the corresponding configurations in the embodiments will be intensively described.

### First Modification

In the first embodiment, the AC-DC converter includes one buffer circuit provided subsequent to a diode. The configuration is not limited thereto, and the AC-DC converter may include multiple buffer circuits subsequent to a diode. According to this modification, the processing load on each buffer circuit can be reduced, so that a desired magnitude of DC electricity can be generated from single-phase AC electricity with higher frequency.

### Second Modification

In the first embodiment, the AC-DC converter compensates for pulsation of an input voltage that vibrates with a frequency that is twice the frequency of the input voltage. The operation is not limited thereto, and the AC-DC converter may compensate for a high frequency component of input electricity pulsation, such as a frequency that is four times (secondary high frequency), eight times (quaternary high frequency), or twelve times (senary high frequency) the input voltage frequency. According to this modification, high frequency noise in input electricity can be reduced, so that smoother DC electricity can be obtained.

### INDUSTRIAL APPLICABILITY

The present invention relates to an AC-DC converter, a DC-DC converter, and an AC-AC converter that convert electricity.

### REFERENCE SIGNS LIST

- 2: single-phase AC power supply

- 3: DC power supply
- 10: rectifier circuit
- 20: step-down circuit
- 30: inductor
- 40: buffer circuit
- 42: buffer circuit
- 48: buffer circuit
- 49a: buffer circuit
- 49b: buffer circuit
- 50: step-up circuit
- 60: inverter
- 90: control unit
- 92: buffer voltage controller
- 94: DC link voltage controller
- 96: inductor voltage controller
- 98: PWM unit
- 100: AC-DC converter
- 200: AC-DC converter
- 300: DC-DC converter
- 400: AC-AC converter

## Claims

1. An AC-DC converter, comprising:
a rectifier circuit (10) that is configured to rectify a first AC voltage to generate a rectified voltage;
a step-down circuit (20) that is configured to step down the rectified voltage;
an inductor (30);
a buffer circuit (40) that comprises a full-bridge circuit including a combination of a preceding-side half bridge configured to include a first diode (D_{C1}) and a first switch (T_{C1}), and a subsequent-side half bridge configured to include a second diode (D_{C2}) and a second switch (T_{C2}), with a capacitor (C_{C}) provided between the preceding-side half bridge and the subsequent-side half bridge, and that is configured to generate a DC voltage from the rectified voltage;
a step-up circuit (50) that is configured to step up a voltage of the buffer circuit; and
a control unit (90);
wherein the control unit (90) is configured to cause the step-up circuit (50) to perform a step-up operation when the output current (i_{R}) from the rectifier circuit (10) is larger than the average output current (i_{B}) of the AC-DC converter and to cause the step-down circuit (20) to perform a step-down operation when the output current (i_{R}) from the rectifier circuit (10) is smaller than the average output current (i_{B}) of the AC-DC converter;
wherein the control unit (90) is configured, during the step-up operation, to continuously turn off the first switch (T_{C1}) and to control the buffer circuit (40) such that the second switch (T_{C2}) operates at a high frequency to switch between a first current control in which the buffer circuit (40) uses excess voltage in the input for charging and a fourth current control in which inductor current bypasses the capacitor (C_{C}); and
wherein the control unit (90) is further configured, during the step-down operation, to continuously turn on the first switch (T_{C1}) and to control the buffer circuit (40) such that the second switch (T_{C2}) operates at a high frequency to switch between a second current control in which the buffer circuit (40) provides electric charges to the output side and a third current control in which inductor current bypasses the capacitor (C_{C}).

2. An AC-DC converter, comprising:
a rectifier circuit (10) that is configured to rectify a first AC voltage to generate a rectified voltage;
a step-down circuit (20) that is configured to step down the rectified voltage;
an inductor (30);
a buffer circuit (40) that comprises a full-bridge circuit including a combination of a preceding-side half bridge configured to include a third switch (T_{C3}) and a first switch (T_{C1}), and a subsequent-side half bridge configured to include a fourth switch (T_{C4}) and a second switch (T_{C2}), with a capacitor (C_{C}) provided between the preceding-side half bridge and the subsequent-side half bridge, and that is configured to generate a DC voltage from the rectified voltage;
a step-up circuit (50) that is configured to step up a voltage of the buffer circuit; and
a control unit (90),
wherein the control unit (90) is configured to cause the step-up circuit (50) to perform a step-up operation when the output current (i_{R}) from the rectifier circuit (10) is larger than the average output current (i_{B}) of the AC-DC converter and to cause the step-down circuit (20) to perform a step-down operation when the output current (i_{R}) from the rectifier circuit (10) is smaller than the average output current (i_{B}) of the AC-DC converter;
wherein the control unit (90) is configured, during the step-up operation, to continuously turn off the first switch (T_{C1}) and to control the buffer circuit (40) such that the second switch (T_{C2}) operates at a high frequency to switch between a first current control in which the buffer circuit (40) uses excess voltage in the input for charging and a fourth current control in which inductor current bypasses the capacitor (C_{C}); and
wherein the control unit (90) is further configured, during the step-down operation, to continuously turn on the first switch (T_{C1}) and to control the buffer circuit (40) such that the second switch (T_{C2}) operates at a high frequency to switch between a second current control in which the buffer circuit (40) provides electric charges to the output side and a third current control in which inductor current bypasses the capacitor (C_{C}).

3. The AC-DC converter of claim 1 or claim 2,
wherein each of the first switch (T_{C1}) and the second switch (T_{C2}) is made of a WBG semiconductor.

4. The AC-DC converter of any of claims 1 to claim 3, comprising
a plurality of preceding-side half bridges connected in parallel, and a plurality of subsequent-side half bridges connected in parallel.

5. An AC-AC converter, comprising:
an AC-DC (100) converter according to any of claims 1 to 4; and
an inverter (60) configured to convert the DC voltage into a second AC voltage.

## Patentansprüche

1. Wechselstrom-Gleichstrom-Wandler, umfassend:
eine Gleichrichterschaltung (10), die dazu eingerichtet ist, eine erste Wechselspannung gleichzurichten, um eine gleichgerichtete Spannung zu erzeugen;
eine Tiefsetzschaltung (20), die dazu eingerichtet ist, die gleichgerichtete Spannung herabzusetzen;
eine Drosselspule (30);
eine Pufferschaltung (40), die eine Vollbrückenschaltung umfasst, die eine Kombination aus einer vorgeschalteten Halbbrücke, die dazu eingerichtet ist, eine erste Diode (D_{C1}) und einen ersten Schalter (T_{C1}) zu umfassen, und einer nachgeschalteten Halbbrücke, die dazu eingerichtet ist, eine zweite Diode (D_{C2}) und einen zweiten Schalter (T_{C2}) zu umfassen, einschließt, wobei ein Kondensator (C_{C}) zwischen der vorgeschalteten Halbbrücke und der nachgeschalteten Halbbrücke angeordnet ist, und die dazu eingerichtet ist, aus der gleichgerichteten Spannung eine Gleichspannung zu erzeugen;
eine Hochsetzschaltung (50), die dazu eingerichtet ist, eine Spannung der Pufferschaltung hochzusetzen; und
eine Steuereinheit (90);
wobei die Steuereinheit (90) dazu eingerichtet ist, die Hochsetzschaltung (50) zu veranlassen, einen Hochsetzbetrieb durchzuführen, wenn der Ausgangsstrom (i_{R}) von der Gleichrichterschaltung (10) größer als der mittlere Ausgangsstrom (i_{B}) des Wechselstrom-Gleichstrom-Wandlers ist, und die Tiefsetzschaltung (20) zu veranlassen, einen Tiefsetzbetrieb durchzuführen, wenn der Ausgangsstrom (i_{R}) von der Gleichrichterschaltung (10) kleiner als der mittlere Ausgangsstrom (i_{B}) des Wechselstrom-Gleichstrom-Wandlers ist;
wobei die Steuereinheit (90) dazu eingerichtet ist, während des Hochsetzbetriebs den ersten Schalter (T_{C1}) dauerhaft ausgeschaltet zu halten und die Pufferschaltung (40) derart zu steuern, dass der zweite Schalter (T_{C2}) mit einer hohen Frequenz arbeitet, um zwischen einer ersten Stromsteuerung, bei der die Pufferschaltung (40) überschüssige Spannung am Eingang zum Laden verwendet, und einer vierten Stromsteuerung, bei der Drosselstrom den Kondensator (C_{C}) umgeht, umzuschalten; und
wobei die Steuereinheit (90) ferner dazu eingerichtet ist, während des Tiefsetzbetriebs den ersten Schalter (T_{C1}) dauerhaft eingeschaltet zu halten und die Pufferschaltung (40) derart zu steuern, dass der zweite Schalter (T_{C2}) mit einer hohen Frequenz arbeitet, um zwischen einer zweiten Stromsteuerung, bei der die Pufferschaltung (40) elektrische Ladungen an die Ausgangsseite abgibt, und einer dritten Stromsteuerung, bei der Drosselstrom den Kondensator (C_{C}) umgeht, umzuschalten.

2. Wechselstrom-Gleichstrom-Wandler, umfassend:
eine Gleichrichterschaltung (10), die dazu eingerichtet ist, eine erste Wechselspannung gleichzurichten, um eine gleichgerichtete Spannung zu erzeugen;
eine Tiefsetzschaltung (20), die dazu eingerichtet ist, die gleichgerichtete Spannung herabzusetzen;
eine Drosselspule (30);
eine Pufferschaltung (40), die eine Vollbrückenschaltung umfasst, die eine Kombination aus einer vorgeschalteten Halbbrücke, die dazu eingerichtet ist, einen dritten Schalter (T_{C3}) und einen ersten Schalter (T_{C1}) zu umfassen, und einer nachgeschalteten Halbbrücke, die dazu eingerichtet ist, einen vierten Schalter (T_{C4}) und einen zweiten Schalter (T_{C2}) zu umfassen, einschließt, wobei ein Kondensator (C_{C}) zwischen der vorgeschalteten Halbbrücke und der nachgeschalteten Halbbrücke angeordnet ist, und die dazu eingerichtet ist, aus der gleichgerichteten Spannung eine Gleichspannung zu erzeugen;
eine Hochsetzschaltung (50), die dazu eingerichtet ist, eine Spannung der Pufferschaltung hochzusetzen; und
eine Steuereinheit (90),
wobei die Steuereinheit (90) dazu eingerichtet ist, die Hochsetzschaltung (50) zu veranlassen, einen Hochsetzbetrieb durchzuführen, wenn der Ausgangsstrom (i_{R}) von der Gleichrichterschaltung (10) größer als der mittlere Ausgangsstrom (i_{B}) des Wechselstrom-Gleichstrom-Wandlers ist, und die Tiefsetzschaltung (20) zu veranlassen, einen Tiefsetzbetrieb durchzuführen, wenn der Ausgangsstrom (i_{R}) von der Gleichrichterschaltung (10) kleiner als der mittlere Ausgangsstrom (i_{B}) des Wechselstrom-Gleichstrom-Wandlers ist;
wobei die Steuereinheit (90) dazu eingerichtet ist, während des Hochsetzbetriebs den ersten Schalter (T_{C1}) dauerhaft ausgeschaltet zu halten und die Pufferschaltung (40) derart zu steuern, dass der zweite Schalter (T_{C2}) mit einer hohen Frequenz arbeitet, um zwischen einer ersten Stromsteuerung, bei der die Pufferschaltung (40) überschüssige Spannung am Eingang zum Laden verwendet, und einer vierten Stromsteuerung, bei der Drosselstrom den Kondensator (C_{C}) umgeht, umzuschalten; und
wobei die Steuereinheit (90) ferner dazu eingerichtet ist, während des Tiefsetzbetriebs den ersten Schalter (T_{C1}) dauerhaft eingeschaltet zu halten und die Pufferschaltung (40) derart zu steuern, dass der zweite Schalter (T_{C2}) mit einer hohen Frequenz arbeitet, um zwischen einer zweiten Stromsteuerung, bei der die Pufferschaltung (40) elektrische Ladungen an die Ausgangsseite abgibt, und einer dritten Stromsteuerung, bei der Drosselstrom den Kondensator (C_{C}) umgeht, umzuschalten.

3. Wechselstrom-Gleichstrom-Wandler nach Anspruch 1 oder Anspruch 2,
wobei der erste Schalter (T_{C1}) und der zweite Schalter (T_{C2}) jeweils aus einem Halbleiter mit großer Bandlücke hergestellt sind.

4. Wechselstrom-Gleichstrom-Wandler nach einem der Ansprüche 1 bis Anspruch 3, umfassend
eine Vielzahl von parallel geschalteten vorgeschalteten Halbbrücken und eine Vielzahl von parallel geschalteten nachgeschalteten Halbbrücken.

5. Wechselstromwandler, umfassend:
einen Wechselstrom-Gleichstrom-(100)-Wandler nach einem der Ansprüche 1 bis 4; und
einen Wechselrichter (60), der dazu eingerichtet ist, die Gleichspannung in eine zweite Wechselspannung umzuwandeln.

## Revendications

1. Convertisseur CA-CC, comprenant :
un circuit redresseur (10) configuré pour redresser une première tension alternative afin de générer une tension redressée ;
un circuit abaisseur (20) configuré pour abaisser la tension redressée ;
une inductance (30) ;
un circuit tampon (40) qui comprend un circuit en pont complet incluant une combinaison d'un demi-pont côté amont configuré pour inclure une première diode (D_{C1}) et un premier interrupteur (T_{C1}), et d'un demi-pont côté aval configuré pour inclure une deuxième diode (D_{C2}) et un deuxième interrupteur (T_{C2}), avec un condensateur (C_{C}) disposé entre le demi-pont côté amont et le demi-pont côté aval, et qui est configuré pour générer une tension continue à partir de la tension redressée ;
un circuit élévateur (50) configuré pour élever une tension du circuit tampon ; et
une unité de commande (90) ;
dans lequel l'unité de commande (90) est configurée pour amener le circuit élévateur (50) à effectuer un fonctionnement élévateur lorsque le courant de sortie (i_{R}) provenant du circuit redresseur (10) est supérieur au courant de sortie moyen (i_{B}) du convertisseur CA-CC et pour amener le circuit abaisseur (20) à effectuer un fonctionnement abaisseur lorsque le courant de sortie (i_{R}) provenant du circuit redresseur (10) est inférieur au courant de sortie moyen (i_{B}) du convertisseur CA-CC ;
dans lequel l'unité de commande (90) est configurée, pendant le fonctionnement élévateur, pour maintenir le premier interrupteur (T_{C1}) désactivé en continu et pour commander le circuit tampon (40) de telle sorte que le deuxième interrupteur (T_{C2}) fonctionne à une haute fréquence pour commuter entre une première commande de courant dans laquelle le circuit tampon (40) utilise une tension excédentaire à l'entrée pour la charge et une quatrième commande de courant dans laquelle le courant dans l'inductance contourne le condensateur (C_{C}) ; et
dans lequel l'unité de commande (90) est en outre configurée, pendant le fonctionnement abaisseur, pour maintenir le premier interrupteur (T_{C1}) activé en continu et pour commander le circuit tampon (40) de telle sorte que le deuxième interrupteur (T_{C2}) fonctionne à une haute fréquence pour commuter entre une deuxième commande de courant dans laquelle le circuit tampon (40) fournit des charges électriques au côté sortie et une troisième commande de courant dans laquelle le courant dans l'inductance contourne le condensateur (C_{C}).

2. Convertisseur CA-CC, comprenant :
un circuit redresseur (10) configuré pour redresser une première tension alternative afin de générer une tension redressée ;
un circuit abaisseur (20) configuré pour abaisser la tension redressée ;
une inductance (30) ;
un circuit tampon (40) qui comprend un circuit en pont complet incluant une combinaison d'un demi-pont côté amont configuré pour inclure un troisième interrupteur (T_{C3}) et un premier interrupteur (T_{C1}), et d'un demi-pont côté aval configuré pour inclure un quatrième interrupteur (T_{C4}) et un deuxième interrupteur (T_{C2}), avec un condensateur (C_{C}) disposé entre le demi-pont côté amont et le demi-pont côté aval, et qui est configuré pour générer une tension continue à partir de la tension redressée ;
un circuit élévateur (50) configuré pour élever une tension du circuit tampon ; et
une unité de commande (90),
dans lequel l'unité de commande (90) est configurée pour amener le circuit élévateur (50) à effectuer un fonctionnement élévateur lorsque le courant de sortie (i_{R}) provenant du circuit redresseur (10) est supérieur au courant de sortie moyen (i_{B}) du convertisseur CA-CC et pour amener le circuit abaisseur (20) à effectuer un fonctionnement abaisseur lorsque le courant de sortie (i_{R}) provenant du circuit redresseur (10) est inférieur au courant de sortie moyen (i_{B}) du convertisseur CA-CC ;
dans lequel l'unité de commande (90) est configurée, pendant le fonctionnement élévateur, pour maintenir le premier interrupteur (T_{C1}) désactivé en continu et pour commander le circuit tampon (40) de telle sorte que le deuxième interrupteur (T_{C2}) fonctionne à une haute fréquence pour commuter entre une première commande de courant dans laquelle le circuit tampon (40) utilise une tension excédentaire à l'entrée pour la charge et une quatrième commande de courant dans laquelle le courant dans l'inductance contourne le condensateur (C_{C}) ; et
dans lequel l'unité de commande (90) est en outre configurée, pendant le fonctionnement abaisseur, pour maintenir le premier interrupteur (T_{C1}) activé en continu et pour commander le circuit tampon (40) de telle sorte que le deuxième interrupteur (T_{C2}) fonctionne à une haute fréquence pour commuter entre une deuxième commande de courant dans laquelle le circuit tampon (40) fournit des charges électriques au côté sortie et une troisième commande de courant dans laquelle le courant dans l'inductance contourne le condensateur (C_{C}).

3. Convertisseur CA-CC selon la revendication 1 ou la revendication 2,
dans lequel le premier interrupteur (T_{C1}) et le deuxième interrupteur (T_{C2}) sont chacun constitués d'un semi-conducteur à large bande interdite.

4. Convertisseur CA-CC selon l'une quelconque des revendications 1 à la revendication 3, comprenant
une pluralité de demi-ponts côté amont montés en parallèle, et une pluralité de demi-ponts côté aval montés en parallèle.

5. Convertisseur CA-CA, comprenant :
un convertisseur CA-CC (100) selon l'une quelconque des revendications 1 à 4 ; et
un onduleur (60) configuré pour convertir la tension continue en une deuxième tension alternative.
